# EUROPÄISCHE PATENTSCHRIFT

(11) **EP 4 241 555 B1**
(45) Veröffentlichungstag und Bekanntmachung des Hinweises auf die Patenterteilung: **20.11.2024**
(21) Anmeldenummer: 23160500.7
(22) Anmeldetag: 07.03.2023
(51) Int. Cl.: A01D 41/14, A01D 34/14

(54) **SCHNEIDWERK MIT BLATTFEDERSCHWINGE ALS SCHNEIDELEMENTTRÄGER**
CUTTING MECHANISM WITH LEAF SPRING ROCKER AS CUTTING ELEMENT CARRIER
BARRE DE COUPE DOTÉE DE RESSORTS À LAMES OSCILLANTS EN TANT QUE SUPPORT D'ÉLÉMENT DE COUPE

(30) Priorität: 10.03.2022 DE 102022105701
(43) Veröffentlichungstag der Anmeldung: 13.09.2023
(73) Patentinhaber: Carl Geringhoff GmbH & Co. Kommanditgesellschaft, 59227 Ahlen (DE)
(72) Erfinder: Heitkamp, Alexander, 48249 Dülmen (DE); Hartmann, Christoph, 59320 Enningerloh (DE); Sudhues, Steffen, 59227 Ahlen (DE); Pütter, Hans, 57439 Attendorn (DE)
(74) Vertreter: Weeg, Thomas

(56) Entgegenhaltungen:
- EP-A1- 3 476 200
- DE-A1- 102010 040 870
- DE-A1- 102019 125 277
- US-A- 4 660 360

## Beschreibung

Die vorliegende Erfindung bezieht sich auf ein Schneidwerk zum Anbau an eine Erntemaschine mit einem sich zumindest im Wesentlichen über die Arbeitsbreite des Schneidwerks erstreckenden Rahmen, der einen Anbaurahmen mit Anbaumitteln zur Verbindung mit einem Einzugskanal einer Erntemaschine aufweist, wobei der Rahmen mit mehreren beabstandet zueinander angeordneten, in Arbeitsrichtung weisenden und an ihrem vorderen Ende in vertikaler Richtung beweglichen Schwingen verbunden ist, von denen mehrere jeweils zumindest abschnittweise als ein aus mehreren Federblättern zusammengesetztes Blattfederpaket ausgebildet sind, und die vorderen Enden dieser Schwingen jeweils über ein Verbindungsbauteil mit Messerwinkelprofilen verbunden sind, an denen die Schneidelemente des Schneidwerks befestigt sind.

Ein gattungsgemäßes Schneidwerk ist aus der Schrift DE 10 2019 125 277 A1 bekannt. Bei dem dort offenbarten Schneidwerk sind benachbarte Schwingen an ihrem vorderen Ende durch jeweils ein den Abstand zwischen den Schwingen überbrückendes Messerwinkelprofil miteinander verbunden. Die Schwingen sind also an ihrem vorderen Ende jeweils mit einem ersten Messerwinkelprofil verbunden, das sich quer zur Arbeitsrichtung nach links erstreckt, und einem zweiten Messerwinkelprofil, das sich quer zur Arbeitsrichtung nach rechts erstreckt. Die Verbindung des freien Endes der Schwinge mit dem Messerwinkelprofil ist aus mehreren Bauteilen zusammengesetzt und aufwendig zu montieren. Sollte das Messerwinkelprofil bei einem Anstoß an einen Fremdkörper beschädigt worden sein, ist auch die Reparatur aufwendig. Die vielen Bauteilverbindungen können im Fall eines Anstoßes des Schneidwerks an ein Hindernis leicht versagen, was eine aufwendigere Reparatur wahrscheinlicher macht.

Andere Schneidwerke sind aus der EP 3 476 200 A1, der US 4 660 360 A oder der DE 10 2010 040870 A1 bekannt.

Es ist die Aufgabe der vorliegenden Erfindung, ein Schneidwerk mit einer Halterung für die Messerwinkelprofile und die daran befestigten Schneidelemente zu schaffen, die kostengünstig zu montieren und reparieren ist. Die Konstruktion sollte im Fall eines Anstoßes des Schneidwerks an einen Fremdkörper möglichst robust ausgestaltet sein. Gleichwohl soll das Schneidwerk so flexibel sein, dass es sich auch in Teilbreiten seiner Arbeitsbreite mit den Schneidelementen an unebene Bodenoberflächen anpassen kann, so dass das Erntegut über die Arbeitsbreite des Schneidwerks hinweg auch bei unebenen Bodenflächen trotzdem in einem möglichst gleich bleibenden Abstand zum Boden abgeschnitten wird.

Die Aufgabe wird für ein gattungsgemäßes Schneidwerk gelöst, indem das Verbindungsbauteil als ein Verbindungsknoten ausgebildet ist, der an seinen quer zur Arbeitsrichtung weisenden Seiten Anschlussmittel aufweist, um darüber ein benachbartes Messerwinkelprofil mit dem Verbindungsknoten zu verbinden.

Der Verbindungsknoten bildet ein Bauteil, das kostengünstig herstellbar ist und leicht und mit geringem Aufwand mit der Schwinge verbunden werden kann. Über die seitlichen Anschlussmittel können die Messerwinkelprofile leicht mit dem Verbindungsknoten verbunden werden. Bei der Montage des Schneidwerks wird also zunächst ein erster Verbindungsknoten mit einer ersten Schwinge verbunden, bevor dann die Messerwinkelprofile von den Seiten her mit dem jeweiligen Verbindungsknoten verbunden werden. Die einzelnen Messerwinkelprofile können dabei im Wechsel mit den Verbindungsknoten von der Maschinenmitte her nach außen in einer aufeinander folgenden Kette Verbindungsknoten - Messerwinkelprofil - Verbindungsknoten - Messerwinkelprofil und so fort montiert werden. Dabei können die Bauteile so ausgebildet sein, dass diese auf einfache Weise jeweils auf das halternde Bauteil nur aufgesteckt oder aufgeschoben werden, um eine hohe Flexibilität des Schneidwerks für die ständigen Anpassungen an die Bodenkontur zu erhalten. Die Bauteile können dann mangels einer starren und festen Verbindung aber auch zueinander beweglich bleiben. Dabei kann der Verbindungsknoten so ausgebildet werden, dass er hohe Haltekräfte erzeugt, um die angebauten Bauteile auch dann in ihrer Einbaulage zu halten, wenn das Schneidwerk an Fremdkörper anstoßen sollte.

Wenn in dieser Beschreibung von "vorne" oder einem "vorderen Ende" eines Bauteils die Rede ist, so ist damit die Richtung oder die Seite eines Bauteils gemeint, die sich auf der in Arbeitsrichtung des Schneidwerks weisenden Seite befindet. Die Arbeitsrichtung des Schneidwerks ist die Richtung, in die es zum Ernten eines Ernteguts in den stehenden Bestand hineinbewegt wird. Mit "hinten" oder dem "hinteren Ende" ist die Richtung oder die Seite des Bauteils gemeint, die der Arbeitsrichtung entgegengesetzt ist. Mit "seitlich" ist eine Richtung gemeint, die in eine Richtung quer zur Arbeitsrichtung weist.

Nach einer Ausgestaltung der Erfindung sind der Verbindungsknoten und die damit verbundenen Messerwinkelprofile über formschlüssig ausgebildete Paarungen von spielfrei oder nahezu spielfrei passenden Anschlussmitteln verbunden, wobei ein erstes Bauteil einer Paarung als Zapfen und ein zweites Bauteil einer Paarung als Aufnahmeöffnung zur Aufnahme des Zapfens ausgebildet sind. Durch die Bauteil-Paarungen ist eine Steckmontage der Messerwinkelprofile möglich. So kann beispielsweise ein Verbindungsknoten seitliche Aufnahmeöffnungen aufweisen, in die jeweils ein Zapfen, der fest mit einem zugehörigen Messerwinkelprofil verbunden ist, in die Aufnahmeöffnung eingesteckt wird. Bei einer spielfreien oder nahezu spielfreien Passung des Zapfens in der Aufnahmeöffnung ist das Messerwinkelprofil in seiner Einbaulage festgelegt, wenn danach der am anderen Ende befindliche Zapfen des Messerwinkelprofils in den nächsten Verbindungsknoten eingesteckt und dort spielfrei oder nahezu spielfrei im Verbindungsknoten der benachbarten Schwinge gehalten wird. Nach einer solchen Montage ist das Messerwinkelprofil an seinen beiden Enden positionsgenau in seiner Einbaulage festgelegt, ohne dass es für die Montage irgendwelcher Montagehilfsmittel wie Schrauben, Nieten und dergleichen bedurft hätte. Natürlich ist das auch möglich, wenn die Zapfen an dem Verbindungsknoten und die Aufnahmeöffnungen an den Messerwinkelprofilen ausgebildet sind. Der Zapfen und die Aufnahmeöffnung können zylindrisch ausgebildet sein, so dass eine Rotation des Messerwinkelprofils um die Längsachse des Zapfens möglich ist. Die Aufnahmeöffnung kann aber auch sich zum Öffnungsboden hin sich konisch verjüngend ausgebildet sein, damit sich der Zapfen besser in der Aufnahmeöffnung bewegen kann, oder der Zapfen ist nach außen hin konisch verjüngend ausgebildet, um diese Funktion zu ermöglichen. Die Bauteile können aber auch unrund ausgestaltet sein, beispielsweise mit einer ovalen Querschnittsform, wodurch eine Rotationsbewegung durch den Formschluss blockiert wird. Trotz der spielfreien oder nahezu spielfreien Montage sind die einzelnen von den Messerwinkelprofilen gebildeten Segmente des Schneidwerks in ihren Teilarbeitsbreiten zumindest in Grenzen zueinander beweglich, weil sie eben nur ineinander eingesteckt und nicht starr miteinander verbunden sind. Diese Montageart erleichtert die Bodenanpassung der Messerwinkelprofile und damit auch des Schneidelements an eine unebene Bodenkontur.

Nach einer Ausgestaltung der Erfindung ist ein Messerwinkelprofil über eine Drehmomentstütze mit dem Verbindungsknoten verbunden, die sich auf der Rückseite des Messerwinkelprofils befindet und die an einer Seite des Verbindungsknotens in einem Abstand zu den Anschlussmitteln mit diesem verbunden ist. Über die Drehmomentstütze wird das Messerwinkelprofil zusätzlich am Verbindungsknoten abgestützt. Durch den Abstand des Verbindungspunktes, an dem die Drehmomentstütze mit dem Verbindungsknoten verbunden ist, zu den Anschlussmitteln wird eine Hebelkraft ausgenutzt, durch die die Anschlussmittel entlastet und das Messerwinkelprofil bei Anstößen an Hindernisse besser abgestützt ist.

Nach einer Ausgestaltung der Erfindung ist der Verbindungsknoten als ein Gussteil hergestellt. Ein Gussteil ist kostengünstig herstellbar, es verfügt über eine hohe Festigkeit, und in der gegossenen Bauteilform können mehrere Funktionen fertig integriert sein, ohne dass dafür verschiedene Teile hergestellt und miteinander verbunden werden müssen. Da die Gussteile nicht sehr groß ausfallen müssen und ihre Anzahl über die Arbeitsbreite des Schneidwerks verteilt gering bleibt, ist ein eventueller Gewichtsnachteil noch vertretbar.

Nach einer Ausgestaltung der Erfindung weist der Verbindungsknoten eine sichelförmige Grundform mit zwei etwa V-förmig angeordneten Schenkeln auf, und der Verbindungsknoten ist so in das Schneidwerk eingebaut, dass sich die Anschlussmittel zur Verbindung des Verbindungsknotens mit den Messerwinkelprofilen im vorderen Bereich des Verbindungsknotens befinden und das nach außen zurücklaufende Trum eines quer zur Arbeitsrichtung fördernden Bandförderers durch den nach hinten offenen Zwischenraum zwischen den beiden Schenkeln hindurchgeführt ist. Durch die Sichelform ist es möglich, den Verbindungsknoten an einer durch den Zwischenraum zwischen dem vor- und dem zurücklaufenden Trum eines quer fördernden Bandförderers reichenden Schwinge zu befestigen und den Verbindungsknoten zusätzlich mit einer Stützstange abzustützen, die sich unterhalb des zurücklaufenden Trums des Bandförderers in einer Ausrichtung parallel zur Arbeitsrichtung des Schneidwerks erstreckt und an dem Rahmen des Schneidwerks abgestützt ist. Die Schwinge, der Verbindungsknoten und die im unteren Bereich des Rahmens abgestützte Stützstange bilden in der Seitenansicht ein Dreieck, durch das das zurücklaufende Trum eines quer fördernden Bandförderers hindurchgeführt ist. Durch die Sichelform des Verbindungsknotens sind die Schwinge und die Stützstange durch nur ein einziges Bauteil miteinander verbunden, was die Montage vereinfacht und eine hohe Festigkeit der Verbindung während des Betriebs des Schneidwerks bietet. Indem der Verbindungsknoten das untere Trum des quer fördernden Bandförderers zumindest bereichsweise umgreift, kann das Schneidwerk im vorderen Bereich sehr flach ausgestaltet werden, wodurch die Gutannahme verbessert wird. Die nach vorne weisende Kante des Bandförderers wird dabei in einem geschützten Bereich hinter dem Messerwinkelprofil gehalten, wo sie nicht durch einen Fremdkörperkontakt beschädigt und verschlissen werden kann. Um einen unnötigen Verschleiß des Bandförderers zu vermeiden, können die oberen Kanten des unteren Schenkels angefast sein, damit der Bandförderer nicht an scharfen Kanten des Schenkels vorbeigeführt wird.

Nach einer Ausgestaltung der Erfindung ist seitlich neben dem unteren Schenkel des Verbindungsknotens eine Stützplatte zur Abstützung des zurücklaufenden Trums eines quer fördernden Bandförderers angeordnet. Durch die Stützplatte wird ein Durchhängen des zurücklaufenden Trums an der Unterseite des Schneidwerks auch neben dem Verbindungsknoten verhindert. Die Stützplatte kann mit dem Verbindungsknoten verbunden sein, um sich mit dessen Bewegungen synchronisiert zu bewegen.

Nach einer Ausgestaltung der Erfindung weist der Verbindungsknoten auf seiner Rückseite eine Befestigungskonsole auf, über die der Verbindungsknoten mit einer Stützstange drehbeweglich verbunden ist, die sich in einer Ebene unterhalb der zugehörigen Schwinge in Längserstreckungsrichtung parallel zur Arbeitsrichtung des Schneidwerks erstreckt, wobei die Stützstange an ihrem dem Verbindungsknoten abgewandten Ende in einer rahmenseitig abgestützten Halterung gehalten ist, die eine Relativbewegung der Stützstange im Verhältnis zur Halterung zulässt. Die drehbewegliche Verbindung der Stützstange mit der Konsole lässt Vertikalbewegungen des vorderen freien Endes der Schwinge zu. Als rahmenseitige Halterung kann beispielsweise eine Hülsenaufnahme vorgesehen sein, in die das dem Verbindungsknoten abgewandte Ende der Stützstange eingesteckt ist, oder die Stützstange ist an ihrem dem Verbindungsknoten abgewandten Ende hohl ausgeführt und mit der hohlen Aufnahmeöffnung auf einen Führungsstift aufgesteckt. Die Hülsenaufnahme oder der Führungsstift lassen eine Relativbewegung der Stützstange in deren axialer Richtung zu. Durch diese Abstützung der Stützstange am Rahmen des Schneidwerks ergibt sich eine kostengünstige und wartungsfreie längenvariable Abstützung der Schwinge, die Auf- und Abwärtsbewegungen der Schwinge in Grenzen zulässt, aber auch als ein Anschlag dienen kann, wenn die Endlagen in der Hülsenaufnahme oder mit dem Führungsstift bei Ein- oder Ausfederbewegungen der Schwinge erreicht werden. Außerdem dämpft die Stützstange die Schwingungsbewegungen der zugehörigen Schwinge durch ein reibkraftmomentbedingtes Bremsmoment in der Halterung, so dass diese auch bei Unebenheiten des Ackerbodens immer in Bodennähe gehalten ist. Anstelle einer Hülsenaufnahme kann auch eine Langlochhalterung oder eine sonstige längenvariable Abstützung der Stützstange am Rahmen verwendet werden.

Nach einer Ausgestaltung der Erfindung weist der Verbindungsknoten an seiner Oberseite Verbindungsmittel auf, über die er mit der zugehörigen Schwinge verbunden ist. Bei den Verbindungsmitteln kann es sich beispielsweise und insbesondere um Schraubkanäle handeln, über die der Verbindungsknoten mit dem vorderen Ende der Schwinge verschraubt werden kann. Die Verbindungsmittel sind in Arbeitsrichtung des Schneidwerks gestaffelt zueinander angeordnet, wodurch sich eine bessere Kraftverteilung bei der Übertragung von einwirkenden Kräften von einem Bauteil in das andere ergibt. Die Verbindungsmittel können zusätzlich in seitlicher Richtung zueinander versetzt angeordnet sein. Die Oberseite kann mit den Verbindungsmitteln eine plane Ebene definieren, auf die die Unterseite der mit dem Verbindungsknoten zu verbindende Schwinge aufgelegt wird. Damit kann auf eine besondere Ausformung der flachseitigen Bereiche der Federblätter, die mit dem Verbindungsknoten verbunden werden, verzichtet werden. Über die plane Ebene an der Oberseite des Verbindungsknotens kann eine flächige Abstützung des Verbindungsknotens auf der nach unten weisenden Flachseite des Federblatts an der Unterseite der Schwinge erfolgen, wodurch die flächige Kraftübertragung zwischen diesen Bauteilen verbessert und die Belastung der Verbindungsmittel mit einwirkenden Kräften verringert wird. Die Verbindung kann fest ausgeführt sein, so dass sie nach der Montage keine Relativbewegung zwischen der Schwinge und dem Verbindungsknoten mehr zulässt, oder sie ist beweglich ausgeführt, so dass nach der Montage noch Relativbewegungen zwischen den Bauteilen möglich sind.

Nach einer Ausgestaltung der Erfindung weist die Schwinge im Bereich der Verbindung mit dem Verbindungsknoten zumindest zwei Lagen von Federblättern auf, die Verbindung der Federblätter der Schwinge mit dem Verbindungsknoten erfolgt über Schraubbolzen, die von oben durch entsprechende Schraublöcher in den Federblättern bis in die als Schraubkanäle ausgeführten Verbindungsmittel im Verbindungsknoten geführt sind, wobei die Größen der Schraublöcher im obersten Federblatt dem Durchmesser der verwendeten Schraubbolzenschäfte entsprechen und die Schraublöcher in dem oder den darunter befindlichen Federblättern als Langlöcher ausgebildet sind, deren Längserstreckungsrichtung in Arbeitsrichtung des Schneidwerks länger ist als der Durchmesser der Schraubbolzenschäfte. Durch die vorgeschlagene Verschraubung werden das oberste Federblatt und der Verbindungsknoten fest miteinander verbunden. Um eine dadurch verursachte Versteifung der Schwinge zu vermeiden, lässt das in dem oder den darunter befindlichen Federblättern ausgebildete Langloch aber gleichwohl noch Relativbewegungen zwischen den Federblättern zu, wie sie sich bei vertikalen Ein- und Ausfederbewegungen der Blattfedern einer Schwinge zwangsläufig einstellen. Wenn die Größen der Schraublöcher im obersten Federblatt dem Durchmesser der verwendeten Schraubbolzenschäfte entsprechen, sitzen die Schraubbolzen spielfrei oder nahezu spielfrei in den Schraublöchern. Die Schraubbolzen werden durch die auf der Oberseite der Federblätter aufliegenden Schraubköpfe in den Schraublöchern gehalten. Die Langlöcher, die länger sind als als der Durchmesser der Schraubbolzenschäfte, erlauben hingegen eine Relativbewegung der Federblätter im Verhältnis zu den Schraubbolzen und dem Verbindungsknoten.

Nach einer Ausgestaltung der Erfindung weist der Verbindungsknoten an seinen quer zur Arbeitsrichtung weisenden Seiten Verbindungsmittel auf, über die er mit einer auf die zugehörige Schwinge aufgeschobenen Aufsteckhülse verbunden ist. Die Aufsteckhülse bildet eine Art Manschette, die dem Zweck dient, ein Abknicken und Umschlagen der Schwinge mit dem Messerwinkelprofil nach oben und hinten zu vermeiden, wenn eine Belastung von vorne oder schräg unten darauf einwirkt. Die Aufsteckhülse erstreckt sich in einer Richtung parallel zur Erstreckungsrichtung der Schwinge und bildet eine Drehmomentstütze gegen ein Abknicken von Federblättern. Um diese Funktion ausfüllen zu können, sollte sich die Aufsteckhülse zumindest über eine Länge von einem Viertel der Länge der Schwinge erstrecken. Als Verbindungsmittel zur Verbindung des Verbindungsknotens mit der Aufsteckhülse kommen beispielsweise Bohrungen für eine Schraubverbindung oder andere geeignete Verbindungsmittel wie beispielsweise Durchsteckhülsen oder -kanäle zur Aufnahme eine Durchsteckbolzens in Betracht. Die Aufsteckhülse ist auf ihrer dem Verbindungsknoten zugewandten Seite bevorzugt mit komplementären Verbindungsmitteln versehen, die eine einfache und schnelle Verbindung der Aufsteckhülse mit dem Verbindungknoten ermöglichen. Die Verbindung der Aufsteckhülse mit dem Verbindungsknoten und/oder der Schwinge kann fest oder beweglich ausgeführt sein.

Nach einer Ausgestaltung der Erfindung ist die Aufsteckhülse als ein mehrschenkliges Blechprofil ausgebildet, dessen seitliche Schenkel an ihren nach unten weisenden Enden an zumindest zwei in Längserstreckungsrichtung der Aufsteckhülse voneinander beabstandeten Stellen durch jeweils einen Verbindungsbolzen miteinander verbunden sind, wobei die Verbindungsbolzen in einem solchen Abstand zur Innenoberfläche des die seitlichen Schenkel miteinander verbindenden mittleren Schenkels des Blechprofils angeordnet sind, dass bei einer auf die Schwinge aufgeschobenen Aufsteckhülse das freie Ende der Schwinge in den Zwischenraum zwischen den Verbindungsbolzen und der Innenoberfläche des mittleren Schenkels des Blechprofils passt. Die Verbindungsbolzen verhindern, dass die Aufsteckhülse nach oben hin von der Schwinge abgehoben werden kann. Sie können höhenmäßig so positioniert sein, dass sie ein zumindest geringes Spiel zwischen sich und der Unterseite der eingesteckten Schwinge frei lassen. Dadurch wird eine Relativbewegung der Federblätter der Schwinge im Verhältnis zur Aufsteckhülse und damit die Auf- und Abwärtsschwingungsbewegungen der Schwinge erleichtert.

Nach einer Ausgestaltung der Erfindung sind auf der Innenseite des die seitlichen Schenkel miteinander verbindenden mittleren Schenkels des Blechprofils und/oder auf der Oberseite des in die Aufsteckhülse eingeschobenen Abschnitts der Schwinge Gleitelemente angeordnet. Die Gleitelemente dienen dazu, das Losbrechmoment für Gleitbewegungen der Aufsteckhülse entlang der Schwinge gering zu halten. Durch eine Verringerung der Kontaktflächen der Bauteile zueinander wird auch die Korrosionsneigung in diesem Bereich und das Risiko von Schmutzaufbau im Kontaktbereich verringert. Die Gleitelemente können aus einem keramischen oder polymeren Material hergestellt sein.

Nach einer Ausgestaltung der Erfindung ist die Aufsteckhülse an ihrem der Arbeitsrichtung entgegengesetzten Ende über eine Verbindungsstange mit der Rückwand des Schneidwerks schwenkbeweglich verbunden. Die Aufsteckhülse dient auf diese Weise als ein Schwenkantrieb, über den bei Ein- und Ausfederbewegungen der Schwinge der Neigungswinkel der Rückwand in Arbeitsrichtung des Schneidwerks der Schwingenbewegung entsprechend verändert wird. Da bei Aufwärts- und Abwärtsschwenkbewegungen der Schwinge auch der quer fördernde Bandförderer in diesem Bereich mit angehoben oder abgesenkt wird, würde sich ohne eine Nachführung der Rückwand ein Spalt zwischen der hinteren Kante des Bandförderers und der Rückwand einstellen. Die Aufsteckhülse mit der Verbindungsstange stellen auf diese Weise sicher, dass sich die Rückwand immer in einem passenden dichtenden Abstand zur Hinterkante des quer fördernden Bandförderers befindet. Insbesondere durch ein Vorziehen oder Zurückschieben der Unterkante der Rückwand kann diese genau an der Hinterkante der Querförderbänder gehalten werden, obwohl sich diese ja mit den Schwingen auf- und abwärts bewegen. Auf diese Weise werden Erntegutverluste vermieden, die sonst durch einen offenen Spalt zwischen der Hinterkante der Querförderbänder und der Rückwand des Schneidwerks entstehen würden.

Nach einer Ausgestaltung der Erfindung ist an der Unterseite des Verbindungsknotens eine Gleitplatte angeordnet, die mit dem Verbindungsknoten verbunden ist. Die Verbindung kann insbesondere höhenverstellbar und/oder schwenkbeweglich ausgestaltet sein. Die Gleitplatte dient dazu, die Schwinge über den Verbindungsknoten nach oben zu drücken, wenn sich das Bodenprofil im Bereich der Schwinge bei der Fahrt in den Bestand des Ernteguts anhebt. Dadurch wird vermieden, dass die Schwinge mit dem Verbindungsknoten an ihrem vorderen Ende in den Boden gerammt wird, wenn die Bodenkontur vor dem Schneidwerk ansteigt. Ist die Verbindung höheneinstellbar, kann das vordere Ende der Schwinge in einem wahlweise einstellbaren Abstand zum Boden gehalten werden. Ist die Gleitplatte schwenkbeweglich mit dem Verbindungsknoten verbunden, kann sich die Gleitplatte mit ihrem Anstellwinkel, mit dem sie auf dem Boden gleitet, laufend an die Bodenkontur anpassen. Der Verbindungsknoten ist gut dazu geeignet, die auftretenden Stellkräfte von der Gleitplatte auf die Schwinge zu übertragen.

Nach einer Ausgestaltung der Erfindung ist die Gleitplatte mit dem Verbindungsknoten über eine Koppelstange verbunden, die an der Befestigungskonsole drehbeweglich befestigt ist und je nach Drehlage die Gleitplatte in einer verschiedenen Winkelstellung und/oder Höhenlage zum Verbindungsknoten abstützt. Die Befestigungskonsole ist gut geeignet, die auf die Gleitplatte einwirkenden Kräfte auf den Verbindungsknoten zu übertragen. Die Koppelstange kann auf derselben Welle gelagert sein wie die Stützstange, wodurch die Montage vereinfacht wird.

Nach einer Ausgestaltung der Erfindung ist eine Seitenverkleidung des Schneidwerks verbunden mit dem Verbindungsknoten, der an der in seitlicher Richtung äußersten Schwinge befestigt ist. Durch die Anbindung der Seitenverkleidung an die am äußersten seitlichen Ende des Schneidwerks befindliche Schwinge befindet sich die Seitenverkleidung immer in einer Höhe, die zur jeweiligen Höhenlage der Schwinge passt.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand von Ausführungsbeispielen näher erläutert werden. Es zeigen:
- Fig. 1:: eine Ansicht von schräg vorne auf eine Erntemaschine mit Schneidwerk,
- Fig. 2:: eine Ansicht auf ein Schneidwerk von hinten,
- Fig. 3:: eine Ansicht auf ein Schneidwerk aus einer Ansicht von schräg vorne und oben,
- Fig. 4:: eine Ansicht auf das in Fig. 3 gezeigte Schneidwerk, jedoch ohne die Förderorgane,
- Fig. 5:: eine ausschnittweise Ansicht auf das Blattfederpaket einer Schwinge,
- Fig. 6:: eine Ansicht auf die Befestigung von Messerwinkelprofilen an einem Verbindungsknoten,
- Fig. 7:: eine Explosionszeichnung eines Verbindungsknotens mit den daran anzubringenden Bauteilen von schräg vorne,
- Fig. 8:: eine Explosionszeichnung eines Verbindungsknotens mit den daran anzubringenden Bauteilen von schräg hinten,
- Fig. 9:: eine Ansicht von schräg oben auf die Verbindungszone des Verbindungsknotens mit der Gleitplatte,
- Fig. 10:: eine Ansicht von vorne auf ein Schneidwerk im Bereich einer Schwinge,
- Fig. 11:: die rahmenseitige Abstützung der Stützstange in einer Halterung, und
- Fig. 12:: eine Ansicht auf eine Seitenverkleidung von vorne.

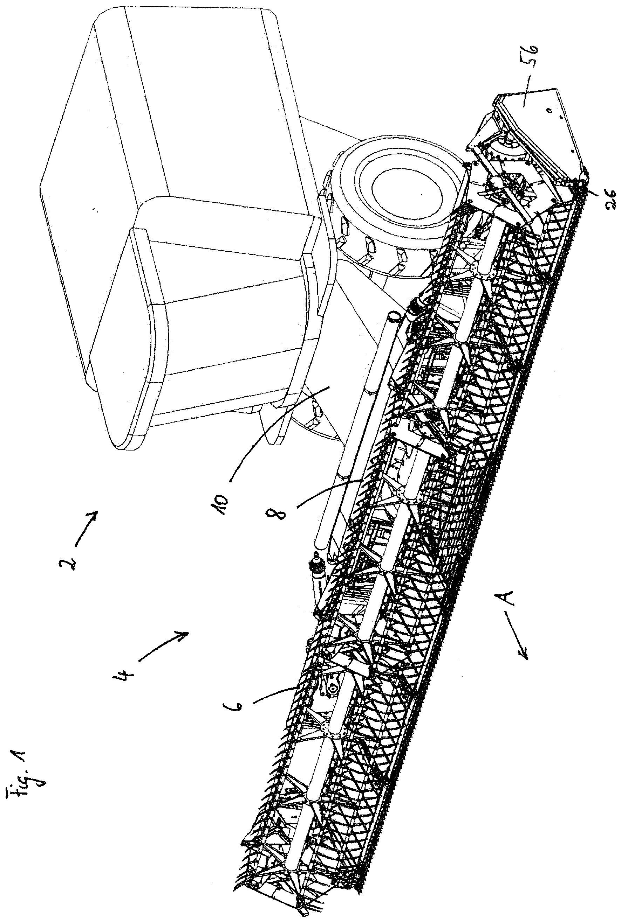

In Fig. 1 ist eine Ansicht von schräg vorne auf eine Erntemaschine 2 mit einem Schneidwerk 4 gezeigt. Das Schneidwerk 4 verfügt über einem Rahmen 6, der über einen Anbaurahmen 8 mit dem Einzugskanal 10 der Erntemaschine 2 verbunden ist.

Die Seitenverkleidung 56 des Schneidwerks 4 ist fest verbunden mit dem Verbindungsknoten 26, der an der in seitlicher Richtung äußersten Schwinge 16 befestigt ist.

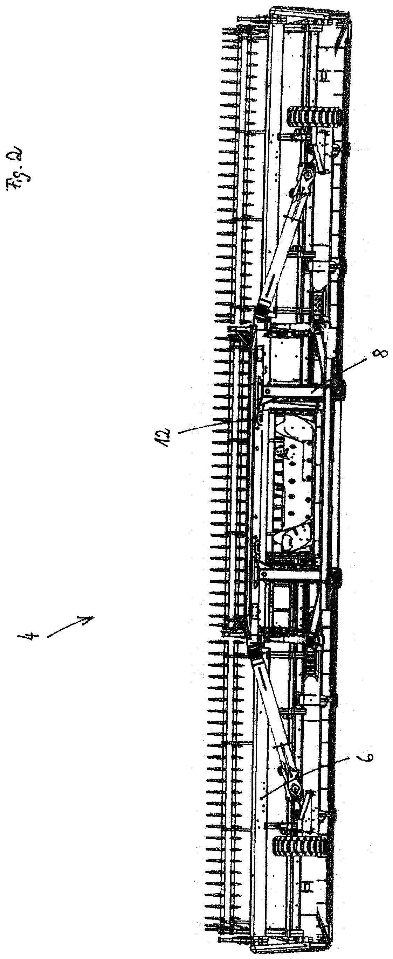

Aus der in Fig. 2 gezeigten Ansicht von hinten auf das Schneidwerk 4 ist erkennbar, dass an dem Anbaurahmen 8 Anbaumittel 12 wie beispielsweise Fanghaken angeordnet sind, über die das Schneidwerk 4 mit der Erntemaschine 2 verbunden wird.

Das Schneidwerk wird in Arbeitsrichtung A in den stehenden Bestand eines Ernteguts hineingelenkt.

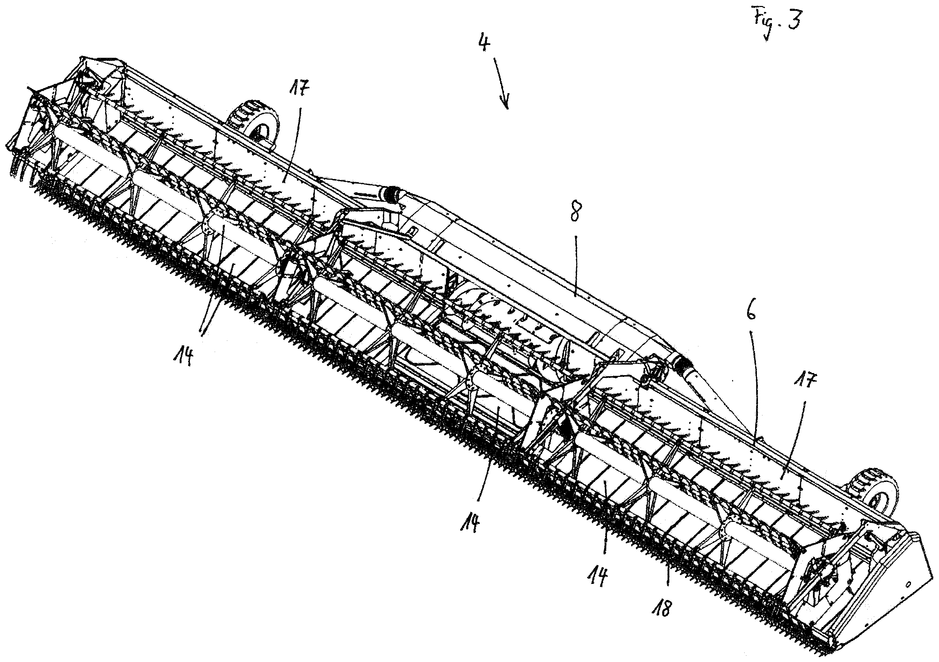

In Fig. 3 ist eine Ansicht auf ein Schneidwerk 4 aus einer Ansicht von schräg vorne und oben gezeigt. In dieser Ansicht ist erkennbar, dass das Schneidwerk 4 eine Anzahl von Förderorganen 14 aufweist. Im gezeigten Ausführungsbeispiel handelt es sich bei den Förderorganen 14 um endlos umlaufende Förderbänder, von denen zwei äußere Förderbänder das geschnittene Erntegut zur Mitte hin fördern und das Erntegut auf ein weiteres, mittig angeordnetes Förderband abwerfen, das das Erntegut nach hinten in Richtung des Einzugskanals 10 der Erntemaschine 2 abfördert. Anstelle der Förderbänder können in Schneidwerken 4 beispielsweise auch Förderschnecken verwendet werden, um das Erntegut abzufördern. Auch andere Förderorgane sind denkbar. Oberhalb der bodenseitigen Förderorgane 14 befindet sich noch als weiteres Förderorgan 14 eine Haspel, die mit einer rotierenden Bewegung mit den Haspelfingern und den Stangen, an denen die Haspelfinger befestigt sind, in das stehende Erntegut eintaucht, dieses abstützt, während die Halme bodennah abgeschnitten werden, und nach dem Schnitt die Halme auf den bodenseitigen Förderorganen ablegt. Die Haspel und das Schneidwerk sind dreigeteilt, damit sich die Schneidwerksteile besser an die Bodenkontur anpassen können.

An der Vorderseite des Schneidwerks 4 befindet sich ein Schneidelement 18 in Gestalt eines Messerbalkens. Der Messerbalken ist quer zur Arbeitsrichtung oszillierend angetrieben, um das Erntegut an seinen Stängeln oder Halmen zu schneiden. Je nach Erntegut und dessen Zustand ist es wünschenswert, das Schneidelement 18 möglichst bodennah zu führen, um Erntegutverluste zu vermeiden. So ist es beispielsweise bei Soja erforderlich, die Halme sehr dicht am Boden zu schneiden, um Verluste von Sojabohnen zu vermeiden. Genauso ist es im Lagergetreide vorteilhaft, möglichst bodennah zu schneiden, um auch dort Erntegutverluste zu vermeiden. Auch für einen hohen Strohertrag ist es vorteilhaft, möglichst bodennah zu schneiden.

Das geschnittene Erntegut wird im Bereich der seitlichen Schneidwerksteile mit den Förderorganen 14 an der Rückwand 17 des Schneidwerks 4 entlang gefördert. Die Rückwand 17 ist zu den bodenseitigen Förderorganen 14 hin geschlossen ausgebildet, um auch dort Erntegutverluste zu vermeiden.

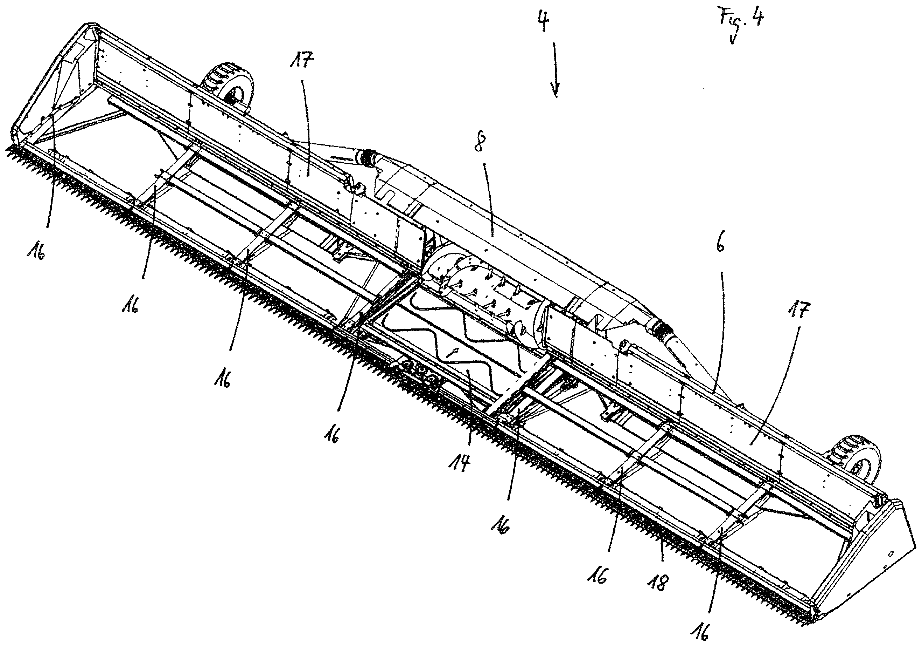

In Fig. 4 ist eine Ansicht auf das in Fig. 3 gezeigte Schneidwerk 4 dargestellt, wobei allerdings die Förderorgane im Bereich der Seitenrahmen weggelassen worden sind. Dadurch sind insbesondere die Schwingen 16 erkennbar, an denen das Schneidelement 18 gehalten ist. Zu sehen ist das mittlere Förderband als ein Beispiel für ein Förderorgan 14.

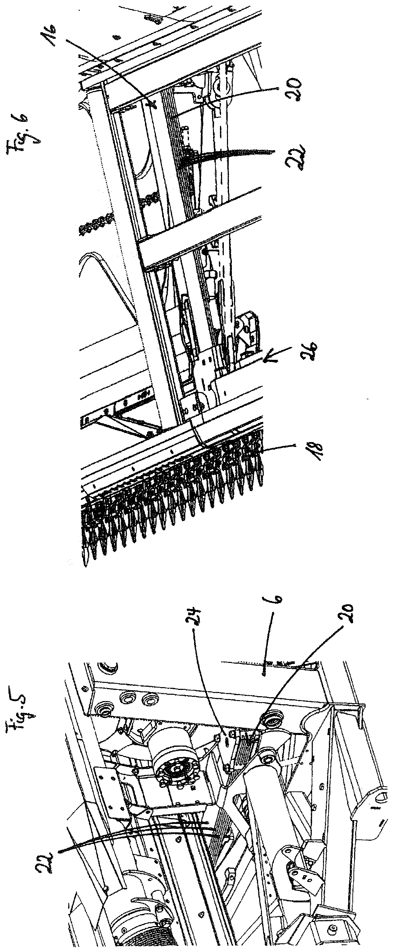

Fig. 5 zeigt eine ausschnittweise Ansicht auf das Blattfederpaket einer Schwinge. Mehrere oder alle Schwingen 16 bestehen aus Blattfederpaketen 20, die aus mehreren Federblättern 22 zusammengesetzt sind. Mehrere oder alle flach aufeinander liegenden Federblätter 22 sind als Blattfederpaket 20 an ihrem rahmenseitigen Ende gemeinsam zwischen Spannelementen 23 am Rahmen 6 gehalten, wie in Fig. 5 gezeigt.

Fig. 6 zeigt eine Ansicht auf die Befestigung von Messerwinkelprofilen 24 an einem Verbindungsknoten 26. In Fig. 6 ist erkennbar, dass das Schneidelement 18 an Messerwinkelprofilen 24 befestigt ist, die ihrerseits wiederum an einem Verbindungsknoten 26 gehalten sind.

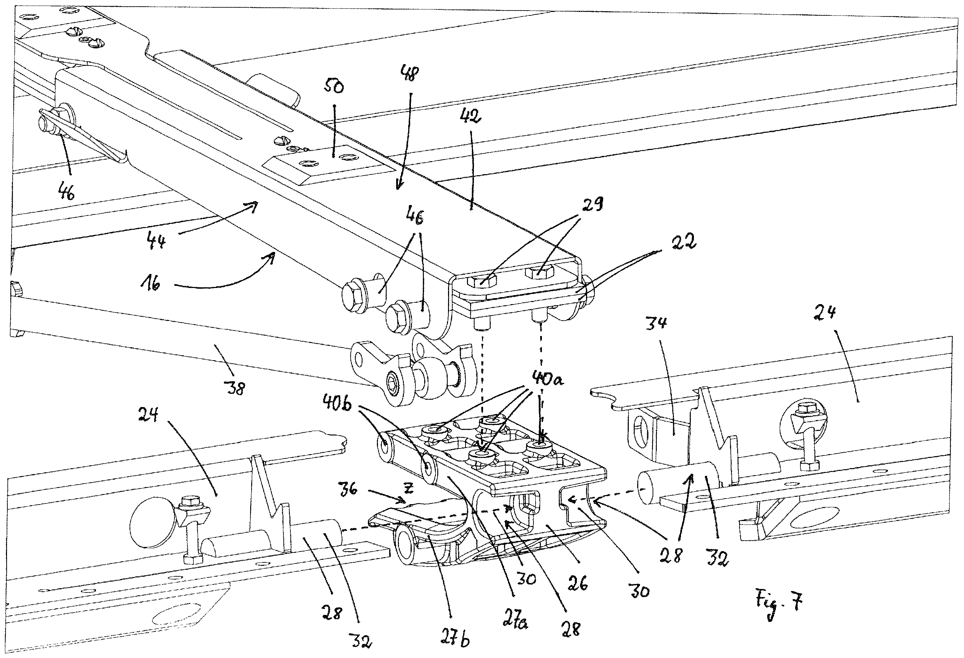

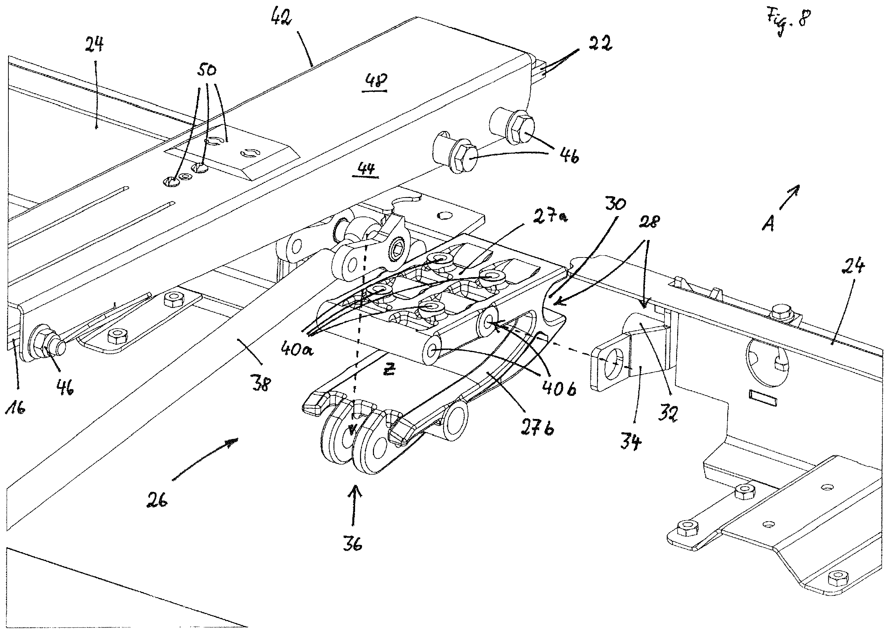

Die Fig. 7 zeigt eine Explosionszeichnung eines Verbindungsknotens 26 mit den daran anzubringenden Bauteilen von schräg vorne, die Fig. 8 zeigt den Verbindungsknoten 26 mit den daran anzubringenden Bauteilen von schräg hinten. Der Verbindungsknoten 26 ist ein Verbindungsbauteil, der insbesondere zur Halterung der Messerwinkelprofile 24 und deren Verbindung mit der Schwinge 16 dient. Der Verbindungsknoten 26 weist eine sichelförmige Grundform mit zwei etwa V-förmig angeordneten Schenkeln 27a, 27b auf. Die Schenkel 27a, 27b begrenzen zwischen sich einen Zwischenraum Z, der nach hinten offen ist. Der Verbindungsknoten 26 weist an seinen quer zur Arbeitsrichtung weisenden Seiten Anschlussmittel 28 auf, um darüber ein benachbartes Messerwinkelprofil 24 mit dem Verbindungsknoten 26 zu verbinden.

Der Verbindungsknoten 26 verfügt über zwei Aufnahmeöffnungen 30 als ein Beispiel für Anschlussmittel 28 zur Aufnahme der Zapfen 32, die als ein Beispiel für Anschlussmittel 28 an den Messerwinkelprofilen 24 ausgebildet sind. Die Aufnahmeöffnungen 30 und die Zapfen 32 bilden formschlüssig ausgebildete Paarungen von spielfrei oder nahezu spielfrei passenden Anschlussmitteln 28, über die der Verbindungsknoten 26 mit den Messerwinkelprofilen 24 verbunden werden kann. Sind die Zapfen 32 in die Aufnahmeöffnungen 30 eingesteckt, sind die Messerwinkelprofile 24 formschlüssig in den Aufnahmeöffnungen 30 gehalten.

Die Messerwinkelprofile 14 verfügen jeweils über eine Drehmomentstütze 34, über die sie zusätzlich mit dem Verbindungsknoten 26 verbunden werden können. Die Drehmomentstützen 34 befinden sich jeweils auf der Rückseite der Messerwinkelprofile 14. Sie werden jeweils an einer Seite des Verbindungsknotens 26 in einem Abstand zu den Anschlussmitteln 28 mit diesem verbunden.

Der Verbindungsknoten 26 ist aus einem Gussteil hergestellt.

Der Verbindungsknoten 26 weist auf seiner Rückseite eine Befestigungskonsole 36 auf, über die der Verbindungsknoten 26 mit einer Stützstange 38 drehbeweglich verbunden werden kann. Die Stützstange 38 erstreckt sich in der Einbaulage im Schneidwerk 4 in einer Ebene unterhalb der zugehörigen Schwinge 16 in Längserstreckungsrichtung parallel zur Arbeitsrichtung A des Schneidwerks 4. In Fig. 7 und 8 sind die jeweiligen Montagepositionen der Bauteile zueinander mit gestrichelten Pfeilen angezeigt.

Der Verbindungsknoten 26 weist an seiner Oberseite Verbindungsmittel 40a in Gestalt von Schraublöchern auf, über die er mit der zugehörigen Schwinge 16 fest verbunden werden kann. Das geschieht im Ausführungsbeispiel in der Weise, dass die Schwinge 16 im Bereich der Verbindung mit dem Verbindungsknoten 26 zumindest zwei Lagen von Federblättern 22 aufweist. In entsprechende Schraublöcher in den Federblättern 22 sind Schraubbolzen 29 eingesteckt, die zur Verbindung der Federblätter 22 der Schwinge 16 mit dem Verbindungsknoten 26 entlang den in Fig. 7 gestrichelten Linien in die Schraublöcher eingeschraubt werden, die sich als Verbindungsmittel 40a auf der Oberseite des Verbindungsknotens 26 befinden. Die Grö-βen der Schraublöcher im obersten Federblatt 22 entsprechen dem Durchmesser der verwendeten Schraubbolzenschäfte und die Schraublöcher in dem oder den darunter befindlichen Federblättern 22 sind als Langlöcher ausgebildet, deren Längserstreckungsrichtung in Arbeitsrichtung A des Schneidwerks 4 länger ist als der Durchmesser der darin eingesteckten Schraubbolzen 29.

Der Verbindungsknoten 26 weist an seinen quer zur Arbeitsrichtung A weisenden Seiten Verbindungsmittel 40b auf, über die er mit einer auf die zugehörige Schwinge 16 aufgeschobenen Aufsteckhülse 42 fest verbunden werden kann. Bei den Verbindungsmitteln 40 handelt es sich im Ausführungsbeispiel wieder um Schraublöcher, in die die Verbindungsbolzen 46 eingesteckt oder eingeschraubt werden können, die in den Fig. 7 und 8 in ihrer Einbauposition an der Aufsteckhülse 42 gezeigt sind.

Im Ausführungsbeispiel ist die die Aufsteckhülse 42 als ein mehrschenkliges Blechprofil ausgebildet, dessen seitliche Schenkel 44 an ihren nach unten weisenden Enden an zumindest zwei in Längserstreckungsrichtung der Aufsteckhülse 42 voneinander beabstandeten Stellen durch jeweils einen Verbindungsbolzen 46 miteinander verbunden sind. Die Verbindungsbolzen 46 sind in einem solchen Abstand zur Innenoberfläche des die seitlichen Schenkel 44 miteinander verbindenden mittleren Schenkels 48 des Blechprofils angeordnet, dass bei einer auf die Schwinge 16 aufgeschobenen Aufsteckhülse 42 das freie Ende der Schwinge 16 in den Zwischenraum zwischen den Verbindungsbolzen 46 und der Innenoberfläche des mittleren Schenkels 48 des Blechprofils passt, wie in Fig. 7 dargestellt. Der einzelne hintere Verbindungsbolzen 46 dient allein dem Zweck, die Aufsteckhülse 42 gegen ein Abheben zu sichern. Die beiden vorderen Verbindungsbolzen 46 werden mit dem Verbindungsknoten 26 verschraubt, wobei der vordere Verbindungsbolzen 46 noch die Drehmomentstütze 34 mit festlegt.

Auf der Innenseite des die seitlichen Schenkel 44 miteinander verbindenden mittleren Schenkels 48 des Blechprofils und auf der Oberseite des in die Aufsteckhülse 42 eingeschobenen Abschnitts der Schwinge 16 sind Gleitelemente 50 angeordnet. Von den auf der Innenseite befindlichen Gleitelementen 50 sind in den Fig. 7 und 8 nur die Clipsfüße zu sehen, die bis auf die Außenseite des Blechprofils herausreichen. Die auf der Außenseite sichtbaren Gleitelemente 50 sind ebenfalls mit Clipsen an dem Blechprofil befestigt, die bis auf die Innenseite des Blechprofils reichen.

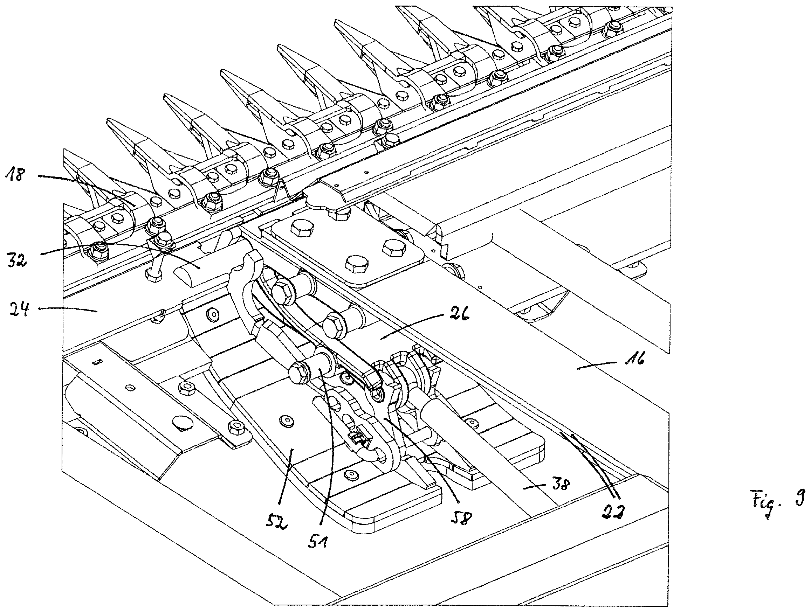

Fig. 9 zeigt eine Ansicht von schräg oben auf die Verbindungszone des Verbindungsknotens 26 mit der Gleitplatte 52. Die Aufsteckhülse 42 sowie die Förderbänder sind in der in Fig. 9 nicht gezeigt. An der Unterseite des Verbindungsknotens 26 ist eine Gleitplatte 52 angeordnet, die mit dem Verbindungsknoten 26 verbunden ist. Die Verbindung erfolgt über einen Schwenkbolzen 51, der durch eine Aufnahmehülse im Verbindungsknoten 26 durchgesteckt ist und an dem die Gleitplatte 52 drehbar aufgehängt ist, sowie über eine Koppelstange 58, die an der Befestigungskonsole 36 drehbeweglich befestigt ist und je nach Drehlage die Gleitplatte 52 in einer verschiedenen Winkelstellung und/oder Höhenlage zum Verbindungsknoten 26 abstützt. Auf der Gleitplatte 52 ist noch eine Kulisse angeordnet, über die die Gleitplatte 52 an der Koppelstange 58 in verschiedenen Schwenkstellungen festlegbar ist.

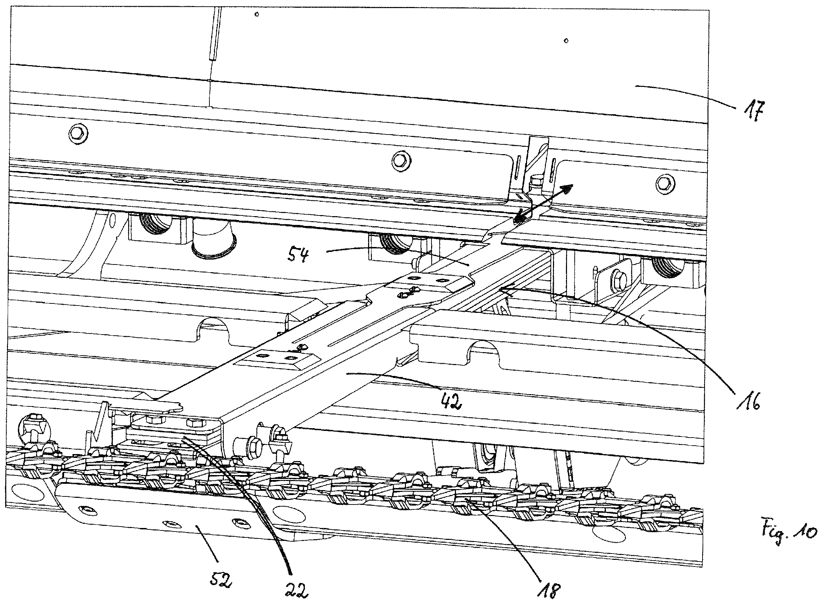

Die Fig. 10 zeigt eine Ansicht von vorne auf ein Schneidwerk 4 im Bereich einer Schwinge 16. Die Aufsteckhülse 42 ist an ihrem der Arbeitsrichtung A entgegengesetzten Ende über eine Verbindungsstange 54 mit der Rückwand 17 des Schneidwerks 4 schwenkbeweglich verbunden. Bei Zug- oder Druckbewegungen der Verbindungsstange 54 wird die Rückwand 17 insbesondere im Bereich der Unterkante entlang dem in Fig. 10 eingezeichneten Doppelpfeil bewegt.

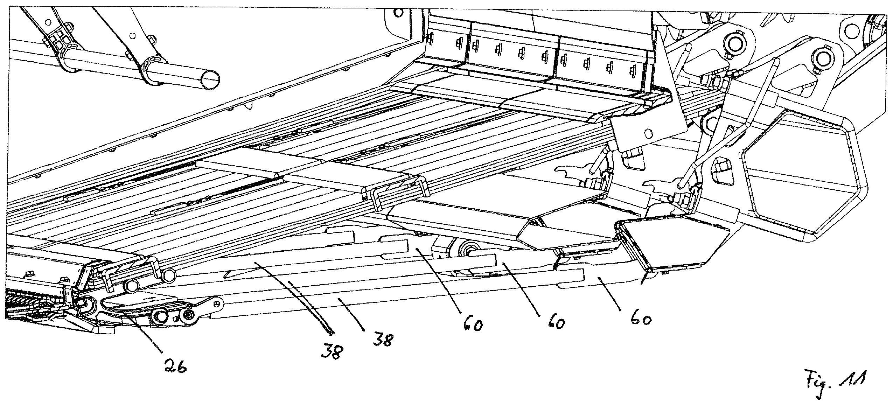

Fig. 11 zeigt die rahmenseitige Abstützung der Stützstange 38 in einer Halterung 60. Die Stützstange 38 ist an ihrem dem Verbindungsknoten 26 abgewandten Ende in einer rahmenseitig abgestützten Halterung 60 gehalten, die eine Relativbewegung der Stützstange 38 im Verhältnis zur Halterung 60 zulässt.

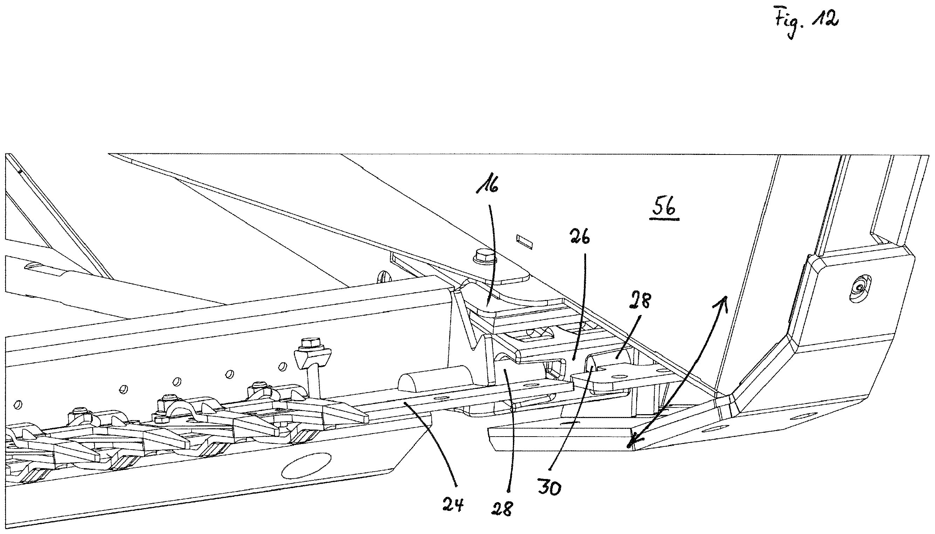

In Fig. 12 ist eine Ansicht auf eine Seitenverkleidung 56 von schräg vorne gezeigt. Die Seitenverkleidung 56 des Schneidwerks 4 ist verbunden mit dem Verbindungsknoten 26, der an der in seitlicher Richtung äußersten Schwinge 16 befestigt ist. Die Verbindung ist beispielsweise möglich, indem die Seitenverkleidung 56 mit einem Befestigungsbolzen als Anschlussmittel 28 versehen ist, der in die äußere Aufnahmeöffnung 30 des Verbindungsknotens 26 eingesteckt ist. Der Befestigungsbolzen kann in der Aufnahmeöffnung rotieren, so dass eine Relativbewegung zwischen dem Befestigungsbolzen und dem Verbindungsknoten möglich ist. Wenn die Schwinge 16 sich auf- und abwärts bewegt, bewegt sich dabei auch die Seitenverkleidung 56 mit auf- und abwärts, wie durch den Doppelpfeil angedeutet. Um der Seitenverkleidung 56 die Auf- und Abwärtsbewegung zu ermöglichen, kann sie an ihrem der Arbeitsrichtung entgegengesetzten Ende beweglich, insbesondere drehbeweglich mit dem Rahmen 6 des Schneidwerks 2 verbunden sein, beispielsweise über das Spannelement 23, an dem die zugehörige Schwinge 16 befestigt ist. Die Verbindung zur Schwinge 16 kann beispielsweise über ein Gummigelenk hergestellt sein.

Die Erfindung ist nicht auf das vorstehend beschriebene Ausführungsbeispiel beschränkt. Ein Fachmann kann das Ausführungsbeispiel auf eine ihm als geeignet erscheinende Weise unter Anwendung des ihm verfügbaren Fachwissens abwandeln, um es an einen konkreten Anwendungsfall anzupassen.

### Bezugsziffern liste

- 2: Erntemaschine
- 4: Schneidwerk
- 6: Rahmen (Schneidwerk)
- 8: Anbaurahmen
- 10: Einzugskanal
- 12: Anbaumittel
- 14: Förderorgan
- 16: Schwinge
- 17: Rückwand
- 18: Schneidelement (Messerbalken)
- 20: Blattfederpaket
- 22: Federblatt
- 23: Spannelement
- 24: Messerwinkelprofil
- 26: Verbindungsknoten
- 27: Schenkel
- 28: Anschlussmittel
- 29: Schraubbolzen
- 30: Aufnahmeöffnung
- 32: Zapfen
- 34: Drehmomentstütze
- 36: Befestigungskonsole
- 38: Stützstange
- 40: Verbindungsmittel
- 42: Aufsteckhülse
- 44: seitlicher Schenkel
- 46: Verbindungsbolzen
- 48: mittlerer Schenkel
- 50: Gleitelement
- 51: Schwenkbolzen
- 52: Gleitplatte
- 54: Verbindungsstange
- 56: Seitenverkleidung
- 58: Koppelstange
- 60: Halterung
- A: Arbeitsrichtung
- Z: Zwischenraum

## Patentansprüche

1. Schneidwerk (4) zum Anbau an eine Erntemaschine (2) mit einem sich zumindest im Wesentlichen über die Arbeitsbreite des Schneidwerks (4) erstreckenden Rahmen (6), der einen Anbaurahmen (8) mit Anbaumitteln (12) zur Verbindung mit einem Einzugskanal (10) der einer Erntemaschine (2) aufweist, wobei der Rahmen (6) mit mehreren beabstandet zueinander angeordneten, in Arbeitsrichtung (A) weisenden und an ihrem vorderen Ende in vertikaler Richtung beweglichen Schwingen (16) verbunden ist, von denen mehrere jeweils zumindest abschnittweise als ein aus mehreren Federblättern (22) zusammengesetztes Blattfederpaket (20) ausgebildet sind, und die vorderen Enden dieser Schwingen (16) jeweils über ein Verbindungsbauteil mit Messerwinkelprofilen (24) verbunden sind, an denen die Schneidelemente (18) des Schneidwerks (4) befestigt sind, **dadurch gekennzeichnet, dass** das Verbindungsbauteil als ein Verbindungsknoten (26) ausgebildet ist, der an seinen quer zur Arbeitsrichtung (A) weisenden Seiten Anschlussmittel (28) aufweist, um darüber ein benachbartes Messerwinkelprofil (24) mit dem Verbindungsknoten (26) zu verbinden.

2. Schneidwerk (4) nach Anspruch 1, **dadurch gekennzeichnet, dass** der Verbindungsknoten (26) und die damit verbundenen Messerwinkelprofile (24) über formschlüssig ausgebildete Paarungen von spielfrei passenden Anschlussmitteln (28) verbunden sind, wobei ein erstes Bauteil einer Paarung als Zapfen (32) und ein zweites Bauteil einer Paarung als Aufnahmeöffnung (30) zur Aufnahme des Zapfens (32) ausgebildet sind.

3. Schneidwerk (4) nach Anspruch 1 oder 2, **dadurch gekennzeichnet, dass** ein Messerwinkelprofil (24) über eine Drehmomentstütze (34) mit dem Verbindungsknoten (26) verbunden ist, die sich auf der Rückseite des Messerwinkelprofils (24) befindet und die an einer Seite des Verbindungsknotens (26) in einem Abstand zu den Anschlussmitteln (28) mit diesem verbunden ist.

4. Schneidwerk (4) nach einem der vorhergehenden Ansprüche, **dadurch gekennzeichnet, dass** der Verbindungsknoten (26) als ein Gussteil hergestellt ist.

5. Schneidwerk (4) nach einem der vorhergehenden Ansprüche, **dadurch gekennzeichnet, dass** der Verbindungsknoten (26) eine sichelförmige Grundform mit zwei etwa V-förmig angeordneten Schenkeln (27) aufweist und der Verbindungsknoten (26) so in das Schneidwerk (4) eingebaut ist, dass sich die Anschlussmittel (28) zur Verbindung des Verbindungsknotens (26) mit den Messerwinkelprofilen (24) im vorderen Bereich des Verbindungsknotens (26) befinden und ein nach außen zurücklaufendes Trum eines quer zur Arbeitsrichtung (A) fördernden Bandförderers durch einen derr nach hinten offenen Zwischenraum (Z) zwischen den beiden Schenkeln (27) hindurchgeführt ist.

6. Schneidwerk (4) nach Anspruch 5, **dadurch gekennzeichnet, dass** seitlich neben dem unteren Schenkel (27) des Verbindungsknotens (26) eine Stützplatte zur Abstützung des zurücklaufenden Trums eines quer fördernden Bandförderers angeordnet ist.

7. Schneidwerk (4) nach einem der vorhergehenden Ansprüche, **dadurch gekennzeichnet, dass** der Verbindungsknoten (26) auf seiner Rückseite eine Befestigungskonsole (36) aufweist, über die der Verbindungsknoten (26) mit einer Stützstange (38) drehbeweglich verbunden ist, die sich in einer Ebene unterhalb der zugehörigen Schwinge (16) in Längserstreckungsrichtung parallel zur Arbeitsrichtung (A) des Schneidwerks (4) erstreckt, wobei die Stützstange (38) an ihrem dem Verbindungsknoten (26) abgewandten Ende in einer rahmenseitig abgestützten Halterung (60) gehalten ist, die eine Relativbewegung der Stützstange (38) im Verhältnis zur Halterung (60) zulässt.

8. Schneidwerk (4) nach einem der vorhergehenden Ansprüche, **dadurch gekennzeichnet, dass** der Verbindungsknoten (26) an seiner Oberseite Verbindungsmittel (40a) aufweist, über die er mit der zugehörigen Schwinge (16) verbunden ist.

9. Schneidwerk (4) nach Anspruch 8, **dadurch gekennzeichnet, dass** die Schwinge (16) im Bereich der Verbindung mit dem Verbindungsknoten (26) zumindest zwei Lagen von Federblättern (22) aufweist, die Verbindung der Federblätter (22) der Schwinge (16) mit dem Verbindungsknoten (26) über Schraubbolzen (29) erfolgt, die von oben durch entsprechende Schraublöcher in den Federblättern (22) bis in die als Schraubkanäle ausgeführten Verbindungsmittel (40b) im Verbindungsknoten (26) geführt sind, wobei die Größen der Schraublöcher im obersten Federblatt (22) dem Durchmesser der verwendeten Schraubbolzenschäfte entsprechen und die Schraublöcher in dem oder den darunter befindlichen Federblättern (22) als Langlöcher ausgebildet sind, deren Längserstreckungsrichtung in Arbeitsrichtung (A) des Schneidwerks (4) länger ist als der Durchmesser der Schraubbolzenschäfte (29).

10. Schneidwerk (4) nach einem der vorhergehenden Ansprüche, **dadurch gekennzeichnet, dass** der Verbindungsknoten (26) an seinen quer zur Arbeitsrichtung (A) weisenden Seiten Verbindungsmittel (40b) aufweist, über die er mit einer auf die zugehörige Schwinge (16) aufgeschobenen Aufsteckhülse (42) verbunden ist.

11. Schneidwerk (4) nach einem der vorhergehenden Ansprüche, **dadurch gekennzeichnet, dass** die Aufsteckhülse (42) als ein mehrschenkliges Blechprofil ausgebildet ist, dessen seitliche Schenkel (44) an ihren nach unten weisenden Enden an zumindest zwei in Längserstreckungsrichtung der Aufsteckhülse (42) voneinander beabstandeten Stellen durch jeweils einen Verbindungsbolzen (46) miteinander verbunden sind, wobei die Verbindungsbolzen (46) in einem solchen Abstand zur Innenoberfläche des die seitlichen Schenkel (44) miteinander verbindenden mittleren Schenkels (48) des Blechprofils angeordnet sind, dass bei einer auf die Schwinge (16) aufgeschobenen Aufsteckhülse (42) das freie Ende der Schwinge (16) in den Zwischenraum (Z) zwischen den Verbindungsbolzen und der Innenoberfläche des mittleren Schenkels (48) des Blechprofils passt.

12. Schneidwerk (4) nach Anspruch 11, **dadurch gekennzeichnet, dass** auf der Innenseite des die seitlichen Schenkel (44) miteinander verbindenden mittleren Schenkels (48) des Blechprofils und/oder auf der Oberseite des in die Aufsteckhülse (42) eingeschobenen Abschnitts der Schwinge (16) Gleitelemente (50) angeordnet sind.

13. Schneidwerk (4) nach einem der vorhergehenden Ansprüche 11 oder 12, **dadurch gekennzeichnet, dass** die Aufsteckhülse (42) an ihrem der Arbeitsrichtung (A) entgegengesetzten Ende über eine Verbindungsstange (54) mit der Rückwand (17) des Schneidwerks (4) schwenkbeweglich verbunden ist.

14. Schneidwerk (4) nach einem der vorhergehenden Ansprüche, **dadurch gekennzeichnet, dass** an der Unterseite des Verbindungsknotens (26) eine Gleitplatte (52) angeordnet ist, die mit dem Verbindungsknoten (26) verbunden ist.

15. Schneidwerk (4) nach Anspruch 14, **dadurch gekennzeichnet, dass** die Gleitplatte (52) mit dem Verbindungsknoten (26) über eine Koppelstange (58) verbunden ist, die an der Befestigungskonsole (36) drehbeweglich befestigt ist und je nach Drehlage die Gleitplatte (52) in einer verschiedenen Winkelstellung und/oder Höhenlage zum Verbindungsknoten (26) abstützt.

16. Schneidwerk (4) nach einem der vorhergehenden Ansprüche, **dadurch gekennzeichnet, dass** eine Seitenverkleidung (56) des Schneidwerks (4) verbunden ist mit dem Verbindungsknoten (26), der an der in seitlicher Richtung äußersten Schwinge (16) befestigt ist.

## Claims

1. Cutterbar (4) for attachment to a harvesting machine (2) having a frame (6) which extends at least substantially over the working width of the cutterbar (4) which has a mounting frame (8) with mounting means (12) for connection to a feeder housing (10) of the harvesting machine (2), wherein the frame (6) is connected to several arms (16) arranged at a distance from one another, pointing in the working direction (A) and movable in the vertical direction at their front end, of which several are each designed, at least in sections, as a leaf spring package (20) composed of several leaf springs (22), and the front ends of these arms (16) are each connected via a connecting component to cutterbar attachment profiles (24), to which the cutting elements (18) of the cutterbar (4) are attached, **characterised in that** the connecting component is designed as a connecting joint (26) which has connecting means (28) on its sides pointing transversely to the working direction (A), in order to connect an adjacent cutterbar attachment profile (24) to the connecting joint (26) using said connecting means.

2. Cutterbar (4) according to claim 1, **characterised in that** the connecting joint (26) and the cutterbar attachment profiles (24) connected thereto are connected via form-fitting pairings of connecting means (28) that fit without play, wherein a first component of a pairing is designed as a trunnion (32) and a second component of a pairing is designed as a retainer opening (30) for receiving the trunnion (32).

3. Cutterbar (4) according to claim 1 or 2, **characterised in that** a cutterbar attachment profile (24) is connected to the connecting joint (26) via a torque bracket (34), which is located on the rear side of the cutterbar attachment profile (24) and is connected to one side of the connecting joint (26) at a distance from the connecting means (28).

4. Cutterbar (4) according to one of the preceding claims, **characterised in that** the connecting joint (26) is produced as a cast part.

5. Cutterbar (4) according to one of the preceding claims, **characterised in that** the connecting joint (26) has a crescent-shaped basic form with two brackets (27) arranged in an approximately V-shape, and the connecting joint (26) is installed in the cutterbar (4) in such a way that the connecting means (28) for connecting the connecting joint (26) to the cutterbar attachment profiles (24) are located in the front area of the connecting joint (26) and an outwardly returning strand of a belt conveyor conveying transversely to the working direction (A) is guided through a clearance (Z) between the two brackets (27) which is open to the rear.

6. Cutterbar (4) according to claim 5, **characterised in that** a supporting plate is arranged laterally next to the lower bracket (27) of the connecting joint (26) to support the returning strand of a belt conveyor that conveys transversely.

7. Cutterbar (4) according to one of the preceding claims, **characterised in that** the connecting joint (26) has a fixing bracket (36) on its rear side, by means of which the connecting joint (26) is rotatably connected to a supporting beam (38) which extends in a plane below the associated arm (16) in the longitudinal extension direction parallel to the working direction (A) of the cutterbar (4), wherein the supporting beam (38) is held at its end facing away from the connecting joint (26) in a frame-supported support (60), which allows a relative movement of the supporting beam (38) in relation to the support (60) .

8. Cutterbar (4) according to one of the preceding claims, **characterised in that** the connecting joint (26) has fasteners (40a) on its upper side, via which it is connected to the associated arm (16).

9. Cutterbar (4) according to claim 8, **characterised in that** the arm (16) has at least two layers of leaf springs (22) in the area where it is connected to the connecting joint (26), the leaf springs (22) of the arm (16) are connected to the connecting joint (26) by bolts (29) that are guided from above through corresponding bolt holes in the leaf springs (22) and into the fasteners (40b) in the connecting joint (26), which are designed as screw channels, wherein the sizes of the screw holes in the uppermost leaf spring (22) correspond to the diameter of the shafts of the screw bolts used and the screw holes in the leaf spring or leaf springs (22) located thereunder are designed as elongated holes whose longitudinal extension direction in the working direction (A) of the cutterbar (4) is longer than the diameter of the shafts of the screw bolts (29).

10. Cutterbar (4) according to one of the preceding claims, **characterised in that** the connecting joint (26) has fasteners (40b) on its sides pointing transversely to the working direction (A), by means of which it is connected to a slip-on sleeve (42) pushed onto the associated arm (16).

11. Cutterbar (4) according to one of the preceding claims, **characterised in that** the slip-on sleeve (42) is designed as a multi-limbed sheet metal profile, the lateral limbs (44) of which are connected to one another at their downward-pointing ends at at least two points spaced apart from one another in the longitudinal extension direction of the slip-on sleeve (42) by a connecting bolt (46) in each case, the connecting bolts (46) are arranged at such a distance from the inner surface of the central limb (48) of the sheet metal profile connecting the lateral limbs (44) to one another that, when the slip-on sleeve (42) is pushed onto the arm (16), the free end of the arm (16) fits into the clearance (Z) between the connecting bolts and the inner surface of the central limb (48) of the sheet metal profile.

12. Cutterbar (4) according to claim 11, **characterised in that** sliding components (50) are arranged on the inside of the central limb (48) of the sheet metal profile, which connects the lateral limbs (44) to one another, and/or on the upper side of the section of the arm (16) inserted into the slip-on sleeve (42).

13. Cutterbar (4) according to one of the preceding claims 11 or 12, **characterised in that** the slip-on sleeve (42) is pivotably connected to the rear wall (17) of the cutterbar (4) at its end opposite the working direction (A) via a connection rod (54).

14. Cutterbar (4) according to one of the preceding claims, **characterised in that** a sliding plate (52) is arranged on the underside of the connecting joint (26) and is connected to the connecting joint (26).

15. Cutterbar (4) according to claim 14, **characterised in that** the sliding plate (52) is connected to the connecting joint (26) via a coupling bar (58) that is rotatably attached to the fixing bracket (36), depending on the rotational position, supports the sliding plate (52) in a different angular position and/or height position relative to the connecting joint (26).

16. Cutterbar (4) according to one of the preceding claims, **characterised in that** a side trim panel (56) of the cutterbar (4) is connected to the connecting joint (26), which is attached to the outermost arm (16) in the lateral direction.

## Revendications

1. Mécanisme de coupe (4) destiné à être monté sur une machine de récolte (2), avec un châssis (6) qui s'étend au moins essentiellement sur la largeur de travail de la barre de coupe (4), qui présente un châssis de montage (8) avec des moyens de montage (12) pour la liaison à un canal d'alimentation (10) de la machine de récolte (2), le châssis (6) étant relié à plusieurs bras oscillants (16) agencés à distance les uns des autres, orientés dans la direction de travail (A) et mobiles dans la direction verticale à leur extrémité avant, dont plusieurs sont réalisés chacun au moins par sections sous la forme d'un paquet de ressorts à lames (20) composé de plusieurs lames de ressort (22), et les extrémités avant de ces bras oscillants (16) étant respectivement reliées, par l'intermédiaire d'un composant de liaison, à des profilés angulaires de lame (24) auxquels sont fixés les éléments de coupe (18) du mécanisme de coupe (4), **caractérisé en ce que** le composant de liaison est réalisé sous la forme d'un noeud de liaison (26) qui présente, sur ses côtés orientés transversalement à la direction de travail (A), des moyens de raccordement (28) pour relier, par l'intermédiaire de ceux-ci, un profilé angulaire de lame (24) voisin au noeud de liaison (26).

2. Mécanisme de coupe (4) selon la revendication 1, **caractérisé en ce que** le noeud de liaison (26) et les profilés angulaires de lame (24) reliés à celui-ci sont reliés par l'intermédiaire de paires de moyens de raccordement (28) adaptés sans jeu, réalisées par complémentarité de forme, un premier composant d'une paire étant réalisé sous forme de tenon (32) et un deuxième composant d'une paire étant réalisé sous forme d'ouverture de réception (30) pour recevoir le tenon (32) .

3. Mécanisme de coupe (4) selon la revendication 1 ou 2, **caractérisé en ce qu'**un profilé angulaire de lame (24) est relié au noeud de liaison (26) par l'intermédiaire d'un support de couple (34) qui se trouve sur le côté arrière du profilé angulaire de lame (24) et qui est relié à un côté du noeud de liaison (26) à une distance des moyens de raccordement (28).

4. Mécanisme de coupe (4) selon l'une quelconque des revendications précédentes, **caractérisé en ce que** le noeud de liaison (26) est fabriqué sous la forme d'une pièce moulée.

5. Mécanisme de coupe (4) selon l'une quelconque des revendications précédentes, **caractérisé en ce que** le noeud de liaison (26) présente une forme de base en croissant avec deux branches (27) agencées approximativement en forme de V et le noeud de liaison (26) est monté dans le mécanisme de coupe (4) de telle sorte que les moyens de raccordement (28) pour relier le noeud de liaison (26) aux profilés angulaires de lame (24) se trouvent dans la zone avant du noeud de liaison (26) et qu'un brin de retour vers l'extérieur d'un convoyeur à bande transportant transversalement à la direction de travail (A) est guidé à travers un espace intermédiaire (Z) ouvert vers l'arrière entre les deux branches (27).

6. Mécanisme de coupe (4) selon la revendication 5, **caractérisé en ce qu'**une plaque de support est agencée latéralement à côté de la branche inférieure (27) du noeud de liaison (26) pour supporter le brin de retour d'un convoyeur à bande à transport transversal.

7. Mécanisme de coupe (4) selon l'une quelconque des revendications précédentes, **caractérisé en ce que** le noeud de liaison (26) présente sur son côté arrière une console de fixation (36) par l'intermédiaire de laquelle le noeud de liaison (26) est relié de manière mobile en rotation à une barre de support (38), qui s'étend dans un plan en dessous du bras oscillant (16) associé, dans la direction d'extension longitudinale, parallèlement à la direction de travail (A) du mécanisme de coupe (4), la barre de support (38) étant maintenue, à son extrémité détournée du noeud de liaison (26), dans un dispositif de maintien (60) supporté côté châssis, qui autorise un mouvement relatif de la barre de support (38) par rapport au dispositif de maintien (60).

8. Mécanisme de coupe (4) selon l'une quelconque des revendications précédentes, **caractérisé en ce que** le noeud de liaison (26) présente sur son côté supérieur des moyens de liaison (40a) par l'intermédiaire desquels il est relié au bras oscillant (16) associé.

9. Mécanisme de coupe (4) selon la revendication 8, **caractérisé en ce que** le bras oscillant (16) présente, dans la zone de la liaison avec le noeud de liaison (26), au moins deux couches de lames de ressort (22), la liaison des lames de ressort (22) du bras oscillant (16) avec le noeud de liaison (26) s'effectue par l'intermédiaire de boulons filetés (29) qui sont guidés depuis le haut à travers des trous filetés correspondants dans les lames de ressort (22) jusque dans les moyens de liaison (40b) conçus sous forme de canaux filetés dans le noeud de liaison (26), les dimensions des trous filetés dans la lame de ressort supérieure (22) correspondant au diamètre des tiges de boulons filetés utilisées et les trous filetés dans la ou les lames de ressort (22) se trouvant en dessous étant réalisés sous forme de trous oblongs dont la direction d'extension longitudinale dans la direction de travail (A) du mécanisme de coupe (4) est plus longue que le diamètre des tiges de boulons filetés (29) .

10. Mécanisme de coupe (4) selon l'une quelconque des revendications précédentes, **caractérisé en ce que** le noeud de liaison (26) présente, sur ses côtés orientés transversalement à la direction de travail (A), des moyens de liaison (40b) par l'intermédiaire desquels il est relié à une douille d'emboîtement (42) enfilée sur le bras oscillant (16) correspondant.

11. Mécanisme de coupe (4) selon l'une quelconque des revendications précédentes, **caractérisé en ce que** la douille d'emboîtement (42) est réalisée sous la forme d'un profilé en tôle à plusieurs branches, dont les branches latérales (44) sont reliées entre elles par un boulon de liaison (46) respectif à leurs extrémités orientées vers le bas en au moins deux emplacements espacés l'un de l'autre dans la direction d'extension longitudinale de la douille d'emboîtement (42), les boulons de liaison (46) étant agencés à une distance telle de la surface intérieure de la branche centrale (48) du profilé en tôle reliant les branches latérales (44) entre elles que, lorsque la douille d'emboîtement (42) est enfilée sur le bras oscillant (16), l'extrémité libre du bras oscillant (16) s'adapte dans l'espace intermédiaire (Z) entre les boulons de liaison et la surface intérieure de la branche centrale (48) du profilé en tôle.

12. Mécanisme de coupe (4) selon la revendication 11, **caractérisé en ce que** des éléments de glissement (50) sont agencés sur le côté intérieur de la branche centrale (48) du profilé en tôle reliant les branches latérales (44) entre elles et/ou sur le côté supérieur de la section du bras oscillant (16) enfilée dans la douille d'emboîtement (42).

13. Mécanisme de coupe (4) selon l'une quelconque des revendications 11 ou 12 précédentes, **caractérisé en ce que** la douille d'emboîtement (42) est reliée de manière mobile en pivotement à son extrémité opposée à la direction de travail (A) à la paroi arrière (17) du mécanisme de coupe (4) par l'intermédiaire d'une barre de liaison (54).

14. Mécanisme de coupe (4) selon l'une quelconque des revendications précédentes, **caractérisé en ce qu'**une plaque de glissement (52) est agencée sur le côté inférieur du noeud de liaison (26), laquelle est reliée au noeud de liaison (26).

15. Mécanisme de coupe (4) selon la revendication 14, **caractérisé en ce que** la plaque de glissement (52) est reliée au noeud de liaison (26) par l'intermédiaire d'une barre d'accouplement (58) qui est fixée à la console de fixation (36) de manière mobile en rotation et qui, en fonction de la position de rotation, soutient la plaque de glissement (52) dans une position angulaire différente et/ou dans une position en hauteur différente par rapport au noeud de liaison (26).

16. Mécanisme de coupe (4) selon l'une quelconque des revendications précédentes, **caractérisé en ce qu'**un habillage latéral (56) du mécanisme de coupe (4) est relié au noeud de liaison (26) fixé au bras oscillant (16) le plus à l'extérieur dans la direction latérale.
